# EUROPEAN PATENT APPLICATION

(11) **EP 2 360 741 A2**
(43) Date of publication of application: **24.08.2011**
(21) Application number: 11154004.3
(22) Date of filing: 10.02.2011
(51) Int. Cl.: H01L 31/052

(54) **Photovoltaic module and method for manufacturing the same**

(30) Priority: 12.02.2010 TW 099104847
(71) Applicant: a2peak power Co., Ltd., Tao-Yuan, Chinese Taipei (CN); Forceon Tech. Co.,Ltd., Hsinchu Chu-Bei City Chinese Taipei (CN)
(72) Inventor: Lin, Ching-Chieh, Longtan Township (TW); Ho, Sin-Wei, Jhubei City (TW); Lin, Mei-Hsiu, Zhunan Township (TW); Huang, Tzu-Hsin, Hsinchu City (TW); Chou, Chun-Hsien, Qingshui Township (TW); Chen, Yen-Chen, Dadu Township (TW)
(74) Representative: Viering, Jentschura & Partner

(57) **Abstract**

A photovoltaic module includes a solar module (10) and a heat sink (20) bonded with a solar unit in a vacuum heating pressing manner. The heat sink (20) is used for dissipating thermal energy generated by the solar module (10). Through the structure, heat of the solar module can be dissipated more effectively, thereby increasing efficiency of photoelectric conversion. Besides, the structure of the photovoltaic module is simplified, a heat conduction interface material in the prior art is not required, and assembly can be performed in the vacuum heating pressing manner, thereby greatly simplifying the manufacturing procedure.

## Description

### BACKGROUND OF THE INVENTION

### Field of the Invention

The present invention relates to a photovoltaic module, and more particularly to a photovoltaic module having a heat sink and packaged in a vacuum heating pressing manner.

### Related Art

Solar energy is an inexhaustible and pollution-free energy source and is always the focus of solving the problems of pollution and shortage that the fossil energy faces currently. Especially a solar cell capable of directly converting solar energy into electric energy has currently become a very important research topic.

The solar cell is mainly made of silicon chips or compound chips and is capable of converting energy of sunlight into the electric energy when the surface thereof is exposed to the sunlight. In actual application, as the photoelectric conversion has a low efficiency, a large number of chips are generally required so as to generate enough electric power. A solar module manufacturer has the chips connected and assembled into a solar cell module, which is also referred to as a solar cell panel or a solar panel. A photovoltaic power generation system can be formed by connecting several solar panels and adding facilities such as an inverter, a controller, and a protective device.

Currently the average efficiency of solar cells of single crystal silicon and poly-silicon in mass production is about 17%. In other words, the solar cells can only convert 17% of the incident sunlight into usable electric energy, and most sunlight is wasted and becomes useless thermal energy. Furthermore, if the solar module is under continuous irradiation of the sunlight, the whole temperature of the module continuously rises, thereby reducing the conversion efficiency of the solar module.

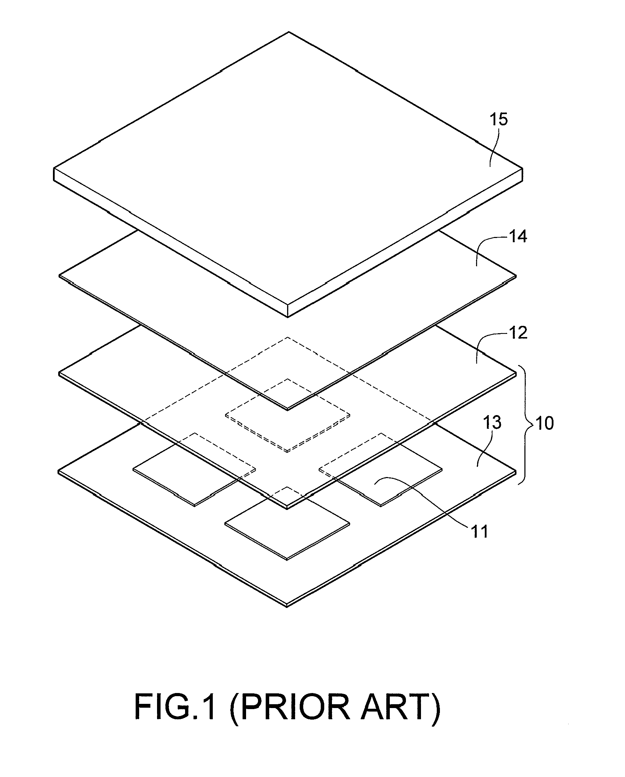

In order to reduce the temperature of the solar module, mostly a metal heat dissipation board 15 is added to help a solar module 10 dissipate the heat, as shown in FIG. 1 sketched with front side down. In the solar module 10 used in the prior art, a solar cell 11 is usually disposed on a substrate 12 with a layer of transparent superstrate 13 such as a glass material covered thereon. In order to transfer the heat of the solar module to the metal heat dissipation board more effectively, a so-called heat conduction interface material 14 is added between the metal heat dissipation board 15 and the solar module 10, so as to help the heat transfer more effectively. In order to simplify the description and the drawing, FIG. 1 only shows the solar module, a heat sink, and the heat conduction interface material.

Currently, although the conventional solar module can be manufactured in a heating pressing manner, the manufacturing procedure thereof is limited to the structure shown in FIG. 1 and is not integrated with the subsequent manufacturing procedure of the metal heat dissipation board, thereby resulting in an excessively high cost of the entire manufacturing. Furthermore, only using the heat dissipation board to dissipate heat is also limited to the contacting area of heat dissipation, thereby resulting in the problem of inefficient heat dissipation, let alone the problem that the heat conduction interface material deteriorates over time.

### SUMMARY OF THE INVENTION

Accordingly, the present invention is directed to a photovoltaic module used for solving the problems of the heat dissipation and the manufacturing procedure of a solar module and simplifying the constituents and the manufacturing procedure of the solar module.

The photovoltaic module according to an embodiment of the present invention comprises: a solar module, in which the solar module comprises a plurality of solar cells packaged between two packaging materials; a transparent layer, bonded to one side of the solar module; and a heat sink, in which the heat sink is made of a heat dissipation material and bonded to the other side of the solar module in a vacuum heating pressing manner.

A method for manufacturing the photovoltaic module according to an embodiment of the present invention comprises: providing a solar module, in which the solar module comprises a plurality of solar cells packaged between two packaging materials and a transparent layer is formed on one side of the solar module; and providing a heat sink, in which the heat sink is made of a heat dissipation material and is combined with the other side of the solar module in a vacuum heating pressing manner.

A method for manufacturing the photovoltaic module according to an embodiment of the present invention comprises: providing a solar module, in which the solar module comprises a plurality of solar cells packaged between two packaging materials and a transparent layer is formed on one side of the solar module; providing a heat sink, in which the heat sink is made of a heat dissipation material, and a plurality of grooves is formed on the other side of the heat sink; and bonding the heat sink with the other side of the solar module in a vacuum heating pressing manner.

The photovoltaic module omits the use of the heat conduction interface material, and thus reducing the cost of the module. As for the solar module, the solar cells are directly packaged in the packaging materials in a heating pressing manner, and the solar module is bonded with the heat sink in a vacuum heating pressing manner, and thus the manufacturing procedure can be simplified.

In the photovoltaic module , heat dissipation strips selectively filled with a phase change material are further disposed on the heat sink, and the heat dissipation efficiency of the solar module is further improved through the phase change material.

### BRIEF DESCRIPTION OF THE DRAWINGS

The present invention will become more fully understood from the detailed description given herein below for illustration only, and thus are not limitative of the present invention, and wherein:
FIG. 1 illustrates a photovoltaic module in the prior art;
FIG. 2 illustrates an embodiment of a photovoltaic module;
FIG. 3 illustrates another embodiment of the photovoltaic module;
FIG. 4 illustrates another embodiment of the photovoltaic module; and
FIG. 5 is a manufacturing flow chart of the photovoltaic module.

### DETAILED DESCREPTION OF THE EMBODIMENTS

The detailed features and advantages of the present invention are described below in great detail through the following embodiments, the content of the detailed description is sufficient for those skilled in the art to understand the technical content of the present invention and to implement the present invention there accordingly. Based upon the content of the specification, the claims, and the drawings, those skilled in the art can easily understand the relevant objectives and advantages of the present invention. The following embodiments are intended to describe the present invention in further detail, but not intended to limit the scope of the present invention in any way.

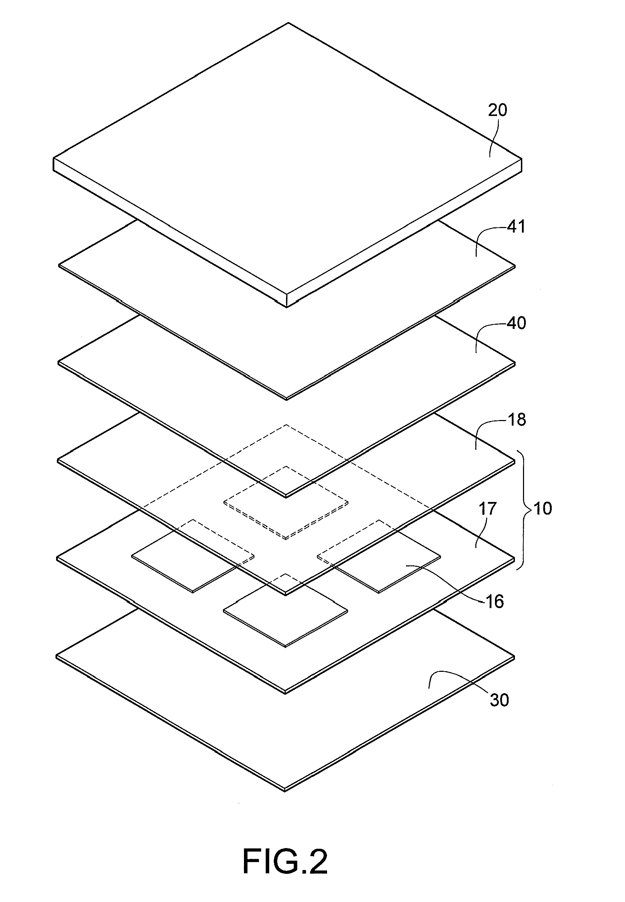

FIG. 2 illustrates an embodiment of a photovoltaic module . Referring to FIG. 2, the photovoltaic module comprises a solar module 10 and a heat sink 20 combined with the solar module 10. The solar module 10 is formed of a plurality of solar cells 16, in which the solar cells 16 are disposed in parallel or in series. In order to simplify the drawing, wirings required by the solar cells 16 in parallel or in series are omitted.

The solar cell used herein comprises an N-type semiconductor and a P-type semiconductor. The N-type semiconductor and the P-type semiconductor are made of a material in IV group (such as single crystal silicon, poly-silicon, amorphous silicon, and SiGe), a material in III-V group (such as GaN, GaAs, GaP, InP, and InGaP) or a material in II-VI group (such as CdTe, CuInSe 2, and CuInGaSe). Thus, the solar cell may be, for example, a single crystal silicon solar cell, a poly-silicon solar cell, an amorphous silicon solar cell (also referred to as an a-Si solar cell), a III-V group semiconductor solar cell or a II-VI group semiconductor solar cell. The solar cell may also use a thin film solar cell such as an amorphous silicon solar cell or an amorphous silicon solar cell formed of GaAs, CdTe or CIGS. Furthermore, an organic dye-sensitized solar cell may also be chosen, and an organic polymer semiconductor solar cell is also an option.

The plurality of solar cells 16 is packaged between two packaging materials 17 and 18. The chosen packaging materials must have a physical advantage in protecting the module and a high light transmittance. Usually the solar cells are packaged between the packaging materials in a heating pressing manner. Thus, thermoplastic or thermosetting materials are usually chosen. In an exemplary embodiment, the packaging materials may choose ethylene-vinyl acetate (EVA), which is a plastic material used for packaging the solar module. Another substitutive option is polyvinylbuterol (PVB) or Thermoplastic Polyurethane (TPU).

The heat sink 20 is mainly made of a heat dissipation material and is bonded with the other side of the solar module 10 in a vacuum heating pressing manner. Metal is usually chosen as the typical material, for example, aluminum metal with good heat conductivity. Definitely other non-metal materials with good heat conductivity can also be chosen. The shape and size of the heat sink 20 are usually designed in cooperation with the solar module 10.

One of important indicators to judge performance of the solar module is water vapor permeability. If the solar module has a bad performance of blocking permeation of the water vapor, moisture in the air can enter the solar module through a solar backboard. The permeation of the water vapor may influence the bonding performance of the packaging materials so that the solar cells are disengaged from the packaging materials, thereby enabling more moisture to directly contact the solar cells so that the solar cells are oxidized. In this regard, in another embodiment, a photovoltaic module further comprises a transparent layer 30. The transparent layer 30 may be made of a soft or rigid material, which can choose ethylene tetrafluoroethylene (ETFE), polyethylene terephthalate (PET), Fluorinated ethylenepropylene (FEP), Tedlar/PET/Tedlar (TPT) or glass. The TPT usually is a tri-layer PVF/PET/PVF composite film formed of polyvinyl fluoride (PVF, also referred to as fluoropolymer resin) and polyester resin (PET). The transparent layer 30 is used for protecting the solar module from invasion of water vapor and other substances. The thickness of the transparent layer 30 is not required to be too thick, as long as the transparent layer 30 can protect the solar module. When a non-glass material is chosen as the transparent layer 30, the heat sink 20 according to the embodiment can increase the strength of the entire module. The strength of the entire module is not reduced due to choosing soft materials or materials without enough supporting ability.

In the foregoing embodiment, it is not required to dispose an insulating layer between the solar module and the heat sink, and only under the circumstance, the packaging materials can be used for insulation between the solar module and the heat sink. In another embodiment, the side of the heat sink 20 bonded with the solar module 10 can also be processed into an insulating state in a surface anodizing manner. In another embodiment, if the packaging materials of the solar module are not thick enough, electrical conduction is generated between the solar cells and the heat sink made of a metal material, thereby further resulting in a failure of the solar module. Thus, under the circumstance, an insulating layer 40 can be disposed between the heat sink 20 and the solar module 10 so as to prevent the generation of electrical connection between the heat sink 20 and the solar module 10. Only when the insulating layer 40 is used, it is required to additionally use the packaging materials 41 such as EVA mentioned above so as to bond the insulating layer 40 with the heat sink 20.

Furthermore, generally the insulating layer 40 may be comprised in the solar module 10, which however is only a different definition for the solar module proposed in the industry due to the manufacturing procedure or other factors. In order to describe more clearly, the present invention defines the insulating layer and the solar module respectively, which is not intended to limit the circumstance that the solar module 10 in the present invention does not comprise the insulating layer 40.

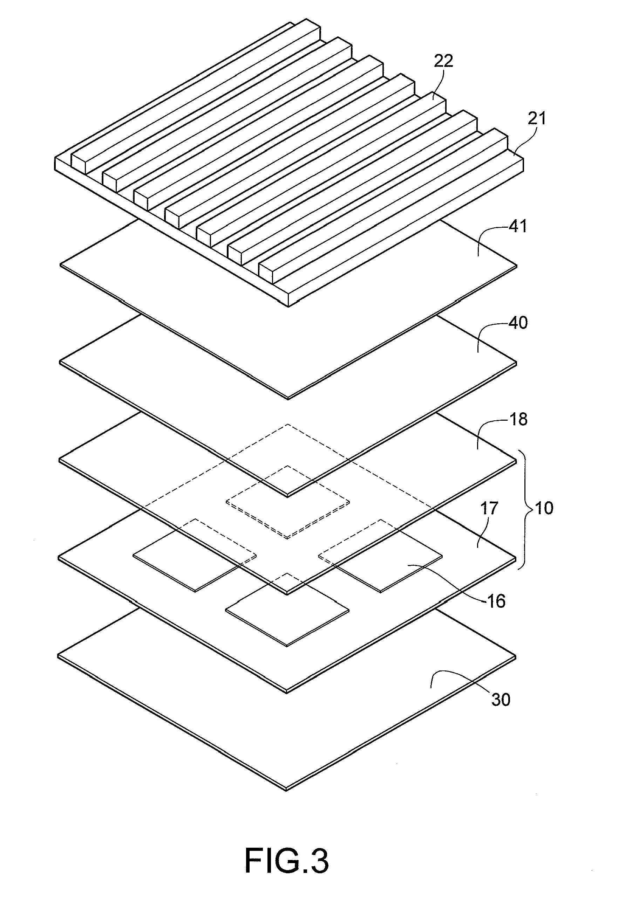

FIG. 3 illustrates another embodiment of the photovoltaic module. Referring to FIG. 3, the constituent and the structure of the embodiment is similar to those of the foregoing embodiment. In the embodiment, the photovoltaic module also comprises a solar module 10 and a heat sink 21 bonded with the solar module 10. The difference lies in that a plurality of heat dissipation fins 22 is formed on the other side of the heat sink 21 so as to increase the heat dissipation area of the heat sink.

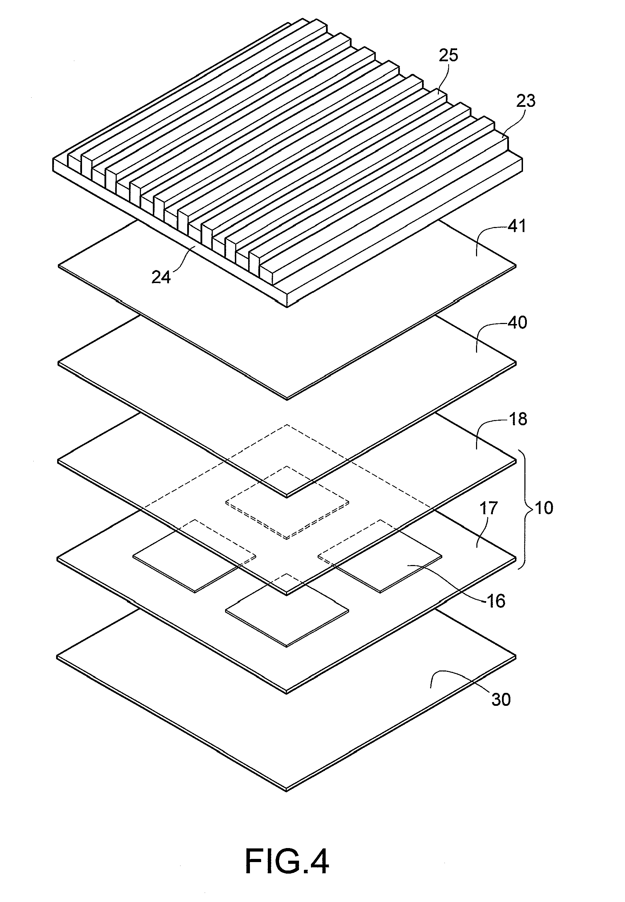

FIG.4 illustrates another embodiment of the photovoltaic module. Referring to FIG. 4, the constituent and the structure of the embodiment is similar to those of the forgoing embodiment. In the embodiment, the photovoltaic module also comprises a solar module 10 and a heat sink 23 bonded with the solar module 10. The difference lies in that a plurality of grooves 24 is formed on the other side of the heat sink 23, in which a plurality of heat dissipation strips 25 is disposed in the grooves. Through an appropriate design, the heat dissipation strips 25 can be just received in the grooves 24. Definitely, it is unnecessary for each of the grooves 24 to be provided with one heat dissipation strip.

In another embodiment, at least one of the plurality of heat dissipation strips 25 is filled with a phase change material. The phase change material is selected from one of the group consisting of paraffin, mineral salt, saline compound and mixture thereof, carboxylic acid and sugar alcohol classes. The phase change material can generate transition in the form of an object. Thus, characteristics of the phase change material like heat absorption and latent heat release in solid-and-liquid phase conversion can be used to control the temperature state of the photovoltaic module. Therefore, the phase change material can generate the effect of absorbing the heat and reducing the temperature when the photovoltaic module reaches a predetermined high temperature so as to reduce the operating temperature of the solar module.

In another embodiment, in order to enable the heat sink to more effectively support the solar module, a plurality of supporting ribs can be further disposed on the heat dissipation strips, in which the supporting ribs are disposed in a direction not parallel with the plurality of heat dissipation strips. Definitely, it is preferred to set the direction perpendicular to the direction of disposing the heat dissipation strips.

In another embodiment, a junction box is further connected to the solar module. The direct current electric energy is transmitted through the solar junction box to a control unit such as a voltage transformer and provided for the use of an electronic equipment after particular processing.

In another embodiment, the solar module further comprises at least a shell disposed on at least one side of the photovoltaic module.

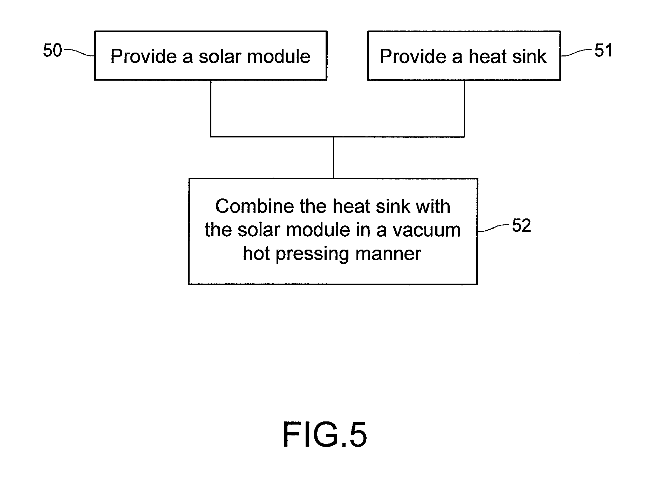

FIG. 5 illustrates a manufacturing flow chart of the photovoltaic module. In the procedure of the manufacturing method related to the present invention according to FIG. 5 or other parts of the specification of the present invention, the sequence of the steps is not fixed and not indispensable. Some steps can be performed at the same time, omitted or added. The flow chart describes the features of the steps of the present invention in a wide and simple manner and is not intended to limit the sequence and times of the steps in the manufacturing method of the present invention.

Firstly, a solar module is provided (Step 50), in which the solar module comprises a plurality of solar cells packaged between two packaging materials and a transparent layer is formed on one side of the solar module. Then, a heat sink is provided (Step 51), in which the heat sink is made of a heat dissipation material. Finally, the heat sink is combined with the other side of the solar module in a vacuum heating pressing manner (Step 52). Steps 50 and 51 can be continuous manufacturing procedure steps or discontinuous manufacturing procedure steps.

For the heat sink herein, a heat sink formed of heat dissipation fins or formed of a plurality of grooves can be chosen and provided as required. When the heat sink formed of the plurality of grooves is chosen, the procedure further comprises a step of disposing a plurality of heat dissipation strips in the plurality of grooves. The heat dissipation strips herein are the same as those in the foregoing embodiment, and thus details are not repeated herein.

In order to further strengthen the structure, the procedure can further comprise as required a step of disposing a plurality of supporting ribs in a direction not parallel with the direction of disposing the plurality of heat dissipation strips.

The photovoltaic module has the advantage of a simplified structure and can be accomplished through the vacuum heating pressing procedure, thereby simplifying the entire manufacturing procedure. Furthermore, the heat dissipation strips filled with the phase change material are further disposed on the heat sink. When the photovoltaic module reaches a predetermined high temperature, the phase change material generates the effect of absorbing the heat and reducing the temperature so as to reduce the operating temperature of the solar module, thereby further effectively improving the power generation performance of the photovoltaic module.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A photovoltaic module, comprising:
a solar module, wherein the solar module comprises a plurality of solar cells and the solar cells are packaged between two packaging materials;
a transparent layer, bonded with one side of the solar module; and
a heat sink, wherein the heat sink is made of a heat dissipation material and bonded with the other side of the solar module in a vacuum heating pressing manner.

2. The photovoltaic module according to claim 1, further comprising an insulating layer formed between the heat sink and the solar module.

3. The photovoltaic module according to claim 1, wherein a plurality of heat dissipation fins is formed on the other side of the heat sink.

4. The photovoltaic module according to claim 1, wherein a plurality of grooves is formed on the other side of the heat sink.

5. The photovoltaic module according to claim 4, further comprising a plurality of heat dissipation strips disposed in the plurality of grooves.

6. The photovoltaic module according to claim 5, wherein at least one of the plurality of heat dissipation strips is filled with a phase change material.

7. The photovoltaic module according to claim 6, wherein the phase change material is selected from one of the group consisting of paraffin, mineral salt, saline compound and mixture thereof, carboxylic acid and sugar alcohol classes.

8. The photovoltaic module according to claim 5, further comprising a plurality of supporting ribs, disposed in a direction not parallel with a direction of disposing the plurality of heat dissipation strips.

9. The photovoltaic module according to claim 1, further comprising at least one shell, disposed on at least one side of the photovoltaic module.

10. A method for manufacturing a photovoltaic module, comprising:
providing a solar module, wherein the solar module comprises a plurality of solar cells, the solar cells are packaged between two packaging materials, and a transparent layer is formed on one side of the solar module;
providing a heat sink, wherein the heat sink is made of a heat dissipation material; and
bonding the heat sink with the other side of the solar module in a vacuum heating pressing manner.

11. A method for manufacturing a photovoltaic module, comprising:
providing a solar module, wherein the solar module comprises a plurality of solar cells, the solar cells are packaged between two packaging materials, and a transparent layer is formed on one side of the solar module;
providing a heat sink, wherein the heat sink is made of a heat dissipation material and a plurality of grooves is formed on the other side of the heat sink; and
bonding the heat sink with the other side of the solar module in a vacuum heating pressing manner.

12. The manufacturing method according to claim 11, further comprising: disposing a plurality of heat dissipation strips in the plurality of grooves.

13. The manufacturing method according to claim 12, wherein at least one of the plurality of heat dissipation strips is filled with a phase change material.

14. The manufacturing method according to claim 13, wherein the phase change material is selected from one of the group consisting of paraffin, mineral salt, saline compound and mixture thereof, carboxylic acid and sugar alcohol classes.

15. The manufacturing method according to claim 12, further comprising: disposing a plurality of supporting ribs in a direction not parallel with a direction of disposing the plurality of heat dissipation strips.
